# EUROPÄISCHE PATENTANMELDUNG

(11) **EP 1 164 518 A1**
(43) Veröffentlichungstag der Anmeldung: **19.12.2001**
(21) Anmeldenummer: 00112888.3
(22) Anmeldetag: 17.06.2000
(51) Int. Cl.: G06F 17/60, H04N 7/173

(54) **Verfahren zur wenigstens teilweise automatisierten Durchführung einer Versteigerung**

(71) Anmelder: NBV + UGA Handels-GmbH, 47638 Straelen (DE)
(72) Erfinder: Honnen, Franz-Willi, 47638 Straelen (DE)
(74) Vertreter: Stenger, Watzke & Ring Patentanwälte

(57) **Zusammenfassung**

Um die Teilnahme von nicht am Versteigerungsort anwesenden Bietern zu erleichtern und zu verbessern und zugleich die Möglichkeit der optischen Inaugenscheinnahme der Produkte einzuräumen, wird mit der Erfindung vorgeschlagen ein Verfahren zur wenigstens teilweise automatisierten Durchführung einer Versteigerung unter Beteiligung von nicht am Versteigerungsort anwesenden Teilnehmern, welche Versteigerungsgebote während der laufenden Versteigerung fernübermitteln, wobei Daten über ein jeweils zu versteigerndes Produkt und den aktuellen Versteigerungspreisstand erfaßt und digital unter Nutzung von Datenfernübertragung und zeitgleich wenigstens eine optische Aufnahme des zu versteigernden Produktes über einen Sendekanal für Teilnehmer abrufbar bereitgestellt werden.

## Beschreibung

Die vorliegende Erfindung betrifft ein Verfahren zur wenigstens teilweise automatischen Durchführung einer Versteigerung unter Beteiligung von nicht am Versteigerungsort anwesenden Teilnehmern.

Neben den an sich bekannten Versteigerungen alter und/oder wertvoller Gegenstände finden alltäglich auch in großem Umfang Versteigerungen von Waren des täglichen Bedarfs statt. Auf diese Weise werden beispielsweise Fangfische, Nahrungsmittel, Blumen und dergleichen versteigert. Bei derartigen Echtzeitversteigerungen werden die Produkte in großen Hallen zur Ansicht durch Bieter auf einem Besichtigungsplatz vorgestellt, üblicherweise auf Transportmitteln vorgefahren. Preise repräsentierende Anzeigen verändern sich nach dem jeweiligen Versteigerungsstand und ein Kaufeinschlag kann bei jeweiligem Versteigerungsstand durch die Bieter beispielsweise mittels eines rechnergesteuerten Signals erfolgen.

Die Versteigerungen vor Ort haben den Nachteil, daß die Anfahrt der Bieter erforderlich ist, was je nach zu versteigerndem Gut das Fahren langer Strecken notwendig macht. Bestehende Fernbietersysteme nutzen beispielsweise ISDN-Leitungen, um Produkt- und Preisinformationen zu übermitteln. Diese haben den Nachteil, daß die Bieter die aktuell zur Versteigerung anstehenden Produkte nicht optisch in Augenschein nehmen können. Mögliche Bildübertragungen über die genannten Kommunikationssysteme bedeuten einen zu großen Zeitaufwand, was der der großen Anzahl von Versteigerungsvorgängen entsprechenden äußerst knappen Zeit entgegensteht.

Ausgehend von diesem Stand der Technik soll mit der vorliegenden Erfindung die **Aufgabe** gelöst werden, die Teilnahme von nicht am Versteigerungsort anwesenden Bietern zu erleichtern und zu verbessern und zugleich die Möglichkeit der optischen Inaugenscheinnahme der Produkte einzuräumen.

Zur technischen **Lösung** dieser Aufgabe wird mit der Erfindung vorgeschlagen ein Verfahren zur wenigstens teilweise automatisierten Durchführung einer Versteigerung unter Beteiligung von nicht am Versteigerungsort anwesenden Teilnehmern, welche Versteigerungsgebote während der laufenden Versteigerung fernübermitteln, wobei Daten über ein jeweils zu versteigerndes Produkt und den aktuellen Versteigerungspreisstand erfaßt und digital unter Nutzung von Datenfernübertragung und zeitgleich wenigstens eine optische Aufnahme des zu versteigernden Produktes über einen Sendekanal für Teilnehmer abrufbar bereitgestellt werden.

Das mit der Erfindung vorgeschlagene System kombiniert digitale Datenübermittlung in Bezug auf Produktinformationen, gegebenenfalls auch akustische Informationen, mit der zeitgleichen Übermittlung von optischen Informationen über entsprechende Sendekanäle. Vor Ort kann beispielsweise unter Nutzung einer Videokamera das aktuell zur Versteigerung anstehende Produkt optisch erfaßt und die Signale an interessierte Fernbieter übermittelt werden. Gemäß einem vorteilhaften Vorschlag der Erfindung sind die Signale codiert, so daß nur über Decoder verfügende Bieter an dem System teilnehmen können.

In vorteilhafter Weise enthält die optische Aufnahme Maßstabsinformationen. Diese können beliebig sein. So kann es bereits ausreichen, wenn eine Person das zu versteigernde Produkt hält oder sich in dessen Bereich aufhält, so daß der Fernbieter über die Videoinformation eine Größenvorstellung in Bezug auf das Produkt erhalten kann.

Für die Übermittlung der Videoinformationen eignen sich satellitenunterstützte Sendekanalsysteme, wobei gemäß einem vorteilhaften Vorschlag der Erfindung diese Systeme mehrkanalfähig genutzt werden. Dies ermöglicht die zeitgleiche Versteigerung von mehreren Produkten, was bei vielen Gütern am Versteigerungsort bereits praktisch realisiert ist. Die Mehrkanalfähigkeit ermöglicht auch die zeitgleiche Teilnahme an mehreren Versteigerungen.

Ein besonderes Anwendungsgebiet des beschriebenen Fernversteigerungssystems ist beispielsweise die Versteigerung von Frischgütern, beispielsweise Pflanzen. Pflanzen werden von einer Vielzahl von Produzenten zu einem zentralen Umschlagplatz angeliefert, wo gegebenenfalls nach Konfektionierung, Informationserfassung und Zusammenstellung eine Versteigerung durchgeführt wird. Es ist durchaus bekannt, daß zeitgleich mehrere Produkte zur Versteigerung am Besichtigungsplatz vorgeführt werden, an welchem Bieter die Produkte in Augenschein nehmen und meist über ein Rechnersignal ein Kaufangebot abgeben. Zu diesem Zweck wird von einem Basispreis aus der Versteigerungspreis stetig gesenkt, bis entsprechende Zuschläge erfolgen. Diese Preisveränderung wird den Bietern optisch angezeigt, so daß diese zeitgleich das Produkt und die Preise wahrnehmen können.

Für das Fernbietersystem werden die erfaßten Produktinformationen mittels DFÜ abfragbar bereitgestellt. Über Rechner verfügende Fernbieter können die digitalen Produktinformationen sowie die Preisveränderungen auf ihrem Monitor verfolgen. Werden zugleich optische Signale übermittelt, können sie auch den Verlauf der Versteigerung akustisch mit vollziehen. Ein Kaufangebot kann beispielsweise akustisch, durch Rechnersignal oder ähnliche Verfahren übermittelt werden.

Gemäß dem erfindungsgemäßen Verfahren wird zeitgleich über Sendekanäle, beispielsweise Glasfaserleitungen, Satellitenkanäle oder dergleichen, eine Videoaufnahme des Produktes übermittelt, wobei es sich um Standbilder oder laufende Bilder handeln kann. Bei Mehrkanalfähigkeit kann der Fernbieter zwischen den verschiedenen zeitgleich laufenden Versteigerungsvorgängen umschalten. Auch ist es möglich, durch entsprechende Verschaltung dem Fernbieter zeitgleich die Bilder parallel verlaufender Versteigerungen auf einmal auf den Monitor zu bringen.

Durch das erfindungsgemäße System wird die Fernteilnahme an entsprechenden Versteigerungen erheblich erleichtert und die optische Inaugenscheinnahme ermöglicht.

Weitere Vorteile und Merkmale der Erfindung ergeben sich aus der folgenden Beschreibung anhand der Figuren. Dabei zeigen:

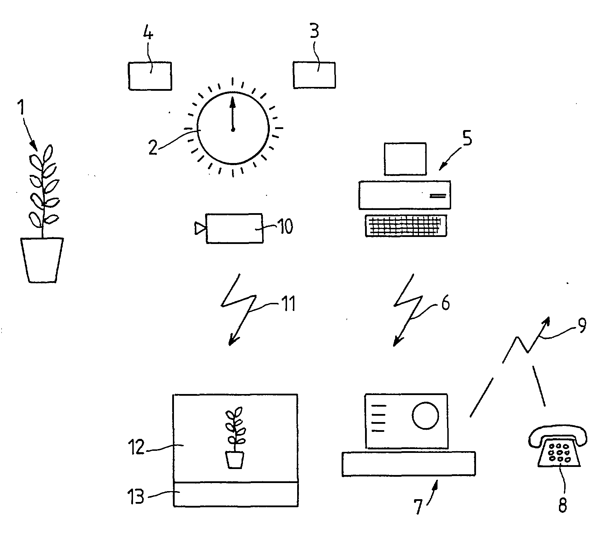

- Fig. 1: eine schematische Darstellung der unterschiedlichen Einheiten zur Durchführung einer Fernversteigerung gemäß einem Ausführungsbeispiel.

Gemäß Fig. 1 soll am Beispiel der Versteigerung von Pflanzen 1 ein Ausführungsbeispiel der Erfindung erläutert werden.

Üblicherweise befinden sich die Pflanzen in entsprechenden Anzahlen in verfahrbaren Gestellen, die, z. B. unter Verwendung eines Schienensystems, am Besichtigungsplatz vorgefahren werden.

Eine Preisveränderungen signalisierende Uhr 2 zeigt den jeweiligen Versteigerungspreisstand. Digitale Informationen in den Feldern 3 und 4 zeigen beispielsweise einen Basispreis und die jeweiligen Einheiten an. Weitere Informationsfelder können optional verwendet werden.

Die Produktinformationen sind ebenso wie die Preisveränderungsinformationen der normalerweise digital betriebenen Uhren 2 in einem Rechnersystem 5 erfaßt und werden über Datenfernübertragung, beispielsweise ein Telekommunikationsnetz, ISDN oder dergleichen 6, Fernbietern auf deren Rechnersystem 7 zur Verfügung gestellt. Aus seinem Rechnersystem 7 hat der Fernbieter digitale Informationen zum Produkt, also Texte, Zahlen und dergleichen, sowie beispielsweise eine Uhrendarstellung mit Echtzeitinformationen zur Verfügung. Die Kommunikation kann ergänzt werden durch akustische Informationen und die Rückkopplung von Kaufinformationen kann über das Rechnersystem 7 oder über ein Telefonsystem 8 oder dergleichen mittels Fernübertragung 9 erfolgen.

Zusätzlich werden am Versteigerungsort von den aktuell zur Versteigerung anstehenden Produkte Videosignale mittels einer Kamera 10 aufgezeichnet und über ein Sendesystem 11, beispielsweise Satellitensendekanäle, abrufbar zur Verfügung gestellt. Die Fernbieter können auf einem TV-Monitor 12 die Produkte optisch in Augenschein nehmen, wobei das System im gezeigten Ausführungsbeispiel über einen Decoder 13 verfügt.

Es ist ohne weiteres möglich, dem Videosignal auch digitale Signale beizumischen, um beispielsweise auf dem TV-Monitor zugleich auch die Preisinformationen oder sonstige Produktinformationen darzustellen.

Das beschriebenen Ausführungsbeispiel dient nur der Erläuterung und ist nicht beschränkend.

### Bezugszeichenliste

- 1: Pflanze
- 2: Preisuhr
- 3: Einheitenfeld
- 4: Basispreisfeld
- 5: Rechnersystem
- 6: DFÜ
- 7: Rechnersystem
- 8: Kommunikationsvorrichtung
- 9: DFÜ
- 10: Videokamera
- 11: Signalübertragung
- 12: TV-Monitor
- 13: Decoder

## Patentansprüche

1. Verfahren zur wenigstens teilweise automatisierten Durchführung einer Versteigerung unter Beteiligung von nicht am Versteigerungsort anwesenden Teilnehmern, welche Versteigerungsgebote während der laufenden Versteigerung fernübermitteln, wobei Daten über ein jeweils zu versteigerndes Produkt und den aktuellen Versteigerungspreisstand erfaßt und digital unter Nutzung von Datenfernübertragung und zeitgleich wenigstens eine optische Aufnahme des zu versteigernden Produktes über einen Sendekanal für Teilnehmer abrufbar bereitgestellt werden.

2. Verfahren nach Anspruch 1, **dadurch gekennzeichnet, daß** zugleich mit der Datenfernübertragung akustische Informationen übermittelt werden.

3. Verfahren nach einem der vorhergehenden Ansprüche, **dadurch gekennzeichnet, daß** zur Datenfernübertragung ein digitales Kommunikationsnetz verwendet wird.

4. Verfahren nach einem der vorhergehenden Ansprüche, **dadurch gekennzeichnet, daß** Versteigerungsgebote der Teilnehmer über die Datenfernübertragung übermittelt werden.

5. Verfahren nach einem der vorhergehenden Ansprüche, **dadurch gekennzeichnet, daß** zur Information über den Versteigerungspreisstand eine Preiseinheiten anzeigende Uhrendarstellung übermittelt wird.

6. Verfahren nach einem der vorhergehenden Ansprüche, **dadurch gekennzeichnet, daß** die optische Aufnahme des zu versteigernden Produktes mittels einer Videokamera erzeugt wird.

7. Verfahren nach Anspruch 6, **dadurch gekennzeichnet, daß** die optische Aufnahme eine Maßstabsinformation umfaßt.

8. Verfahren nach einem der vorhergehenden Ansprüche, **dadurch gekennzeichnet, daß** die optische Aufnahme unter Nutzung von Satellitensendekanälen übermittelt wird.

9. Verfahren nach einem der vorhergehenden Ansprüche, **dadurch gekennzeichnet, daß** wenigstens die die optische Aufnahme repräsentierenden Signale codiert werden.

10. Verfahren nach einem der vorhergehenden Ansprüche, **dadurch gekennzeichnet, daß** das Aufnahme-Übermittlungssystem mehrkanalfähig ist.
